# EUROPEAN PATENT SPECIFICATION

(11) **EP 0 337 931 B1**
(45) Date of publication and mention of the grant of the patent: **14.02.1996**
(21) Application number: 89730102.4
(22) Date of filing: 13.04.1989
(51) Int. Cl.: C08L 67/06, C08F 218/10

(54) **Shrink controlled low-temperature-curable polyester resin compositions**
Bei niedriger Temperatur härtbare Polyester-Zusammensetzungen mit kontrolliertem Schrumpfen
Compositions de polyesters avec retrait controllé durcissables aux températures faibles

(30) Priority: 15.04.1988 US 181942
(43) Date of publication of application: 18.10.1989
(73) Proprietor: W.R. Grace & Co.-Conn., New York New York 10036 (US)
(72) Inventor: Bansleben, Donald Albert, Columbia Maryland 21044 (US); Daly, Joseph Michael, Columbia Maryland 21044 (US); Zavadsky, Emil, CH-1860 Aigle (CH)
(74) Representative: UEXKÜLL & STOLBERG

(56) References cited:
- EP-A- 0 075 765
- FR-A- 2 163 464
- CHEMICAL ABSTRACTS vol. 74, no. 14, 5 April 1971, page 2, left hand column, abstract no. 65655q, Columbus, Ohio, US; E. HACKEL: "VeoVa as a comonomer for Elotex"; & Fette, Seifen, Anstrichm. 1970, 72(12),1053-6

## Description

### BACKGROUND OF THE INVENTION

The present invention relates to unsaturated polyester resin compositions which exhibit extremely low shrink, no shrink or even an expansion upon curing. The invention more particularly relates to shrink-controlled low temperature (about 0°C to about 50°C) curable compositions containing unsaturated polyester ("UPE") resin. The compositions are useful in a wide variety of contexts, such as pourable, self-levelling floorings, trowellable mortars, and joint sealing.

The fact that certain polymers shrink during curing is well documented. Unsaturated polyester resins, to which this invention is directed, commonly shrink from 5-15% in volume upon cure. Although such shrinkage can be tolerated in many situations, this is not always the case. Shrinkage in unsaturated polyester resin fabric reinforced composites can manifest itself as cracking, pitting, delamination or dimpling in the finished product. A self-levelling pourable flooring composition based upon unsaturated polyester resin may delaminate or shrink away from walls to leave undesirable gaps. Problems caused by shrinkage of unsaturated polyester resins used in other contexts are numerous and well known.

Chemical additives useful for controlling shrinkage during the curing of polymers such as unsaturated polyester resin systems are in demand. Although many such additives are known, including polyvinyl acetate, thermoplastic homopolymers and copolymers of butadiene, styrene, acrylonitrile, methyl methacrylate and ethylene, the search for new, effective shrink control agents continues. FR-A- 2 163 464 discloses a moulding mass based on an unsaturated polyester comprising:
a) an unsaturated polyester,
b) a vinyl monomer which is copolymerizable with said unsaturated polyester,
c) a homopolymer and/or copolymer composed of at least 90 % by weight of vinyl acetate optionally in combination with a maximum 10 wt% other vinyl esters such as vinyl isobuterate or vinyl laurate.

EP-A-0075 765 discloses a low profile polyester moulding composition containing
a) a thermosetting unsaturated polyester,
b) a thermoplastic polymer additive to control shrinkage which may be a copolymer containing at least 50 wt.% vinyl acetate and ethylenically unsaturated carboxylic acids such as acrylic acid or maleic acid or their anhydrides as comonomer.

E. Hackel: "VeoVa als Comonomer für Elotex" in Fette, Seifen, Anstrichmittel Bd. 72 (12), Seiten 1053-1056 (1970) discloses properties of poly (vinyl) versatate-covinyl acetate) (ELOTEX). There is no disclosure of a shrinkage controlable polymerizable polyester resin composition. Furthermore, there is no disclosure ELOTEX copolymers may be used as additive in order to control shrinkage when polymerizing unsaturated polyester resins which may be used as pourable, self-levelling floorings, trowellable mortars and joint sealings.

Accordingly, it is an object of the present invention to provide a novel shrink control agent for unsaturated polyester resins, especially when curing is desired at, or below, ambient temperatures.

### SUMMARY OF THE INVENTION

The foregoing object has been achieved in the discovery that copolymers of fatty alkyl vinyl esters and short chain vinyl esters are useful and indeed highly effective shrink control agents ("SCA") for curable unsaturated polyester resins. The inventive SCA maybe added to the base polyester resin component long before the addition of the polymerization initiator, for example, during manufacture or packaging of the resin, as no degradation of its performance over time has been found. When fillers are to be present in the product, the copolymer SCA is preferably added to the polyester resin at the same time as the polymerization initiator, fillers, and other optional additives, whereupon shrinkage during the subsequent curing reaction is minimized and often totally prevented. The amount of the inventive SCA added is an amount effective to reduce or eliminate shrinkage upon cure.

Thus the present invention provides a shrinkage-controllable, curable polyester resin composition comprising:
(a) unsaturated polyester resin and
(b) 1 to 40 % by weight, based on the weight of resin (a), of a copolymer as shrinkage-control agent consisting of moieties derived from:
   (i) a fatty alkyl vinyl ester of the formula: 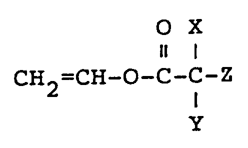 wherein each of X and Y is independently selected from a methyl and ethyl group, Z is an aliphatic hydrocarbon group and the sum total carbon atom content of X, Y and Z is from 7 to 9, and
   (ii) a short chain vinyl ester of the formula:

      CH₂=CHOOCR'

      wherein R' is C₁-C₃ alkyl,
   said moiety derived from said fatty alkyl vinyl ester (i) being present in said copolymer (b) in an amount of 40 to 80 mole percent.

### DETAILED DESCRIPTION

The unsaturated polyester resins are well known and readily available. The unsaturated polyesters themselves are prepared by reacting (copolymerizing) unsaturated acids or anhydrides with polyols, especially alkylene diols or triols. When the term "unsaturated polyester resin" is employed in the art, it is commonly implied that the polyesters are dissolved in a crosslinking unsaturated monomer, although this term as used herein is broad enough to cover both the polyesters themselves and the polyester/crosslinking monomer mixture. Typical acids or anhydrides utilized for preparation of the polyesters include unsaturated dicarboxylic acids such as maleic and fumaric acids and maleic anhydride. Typical polyols are the lower alkyl polyols, typically glycols, such as ethylene and propylene glycol, diethylene glycol, neopentyl glycol (2,2-methylol propane), glycol derivatives of dicyclopentadiene and glycerol. Vinylically unsaturated monomers, especially styrene, are commonly utilized as crosslinking monomers.

To control copolymerization of the polyester with the crosslinking monomer, and final properties, it is usually desirable to limit the number of unsaturated reactive sites in the polyesters. This is accomplished by incorporating substituted or unsubstituted isophthalic acid, substituted or unsubstituted orthophthalic acid, orthophthalic anhydride or substituted orthophthalic anhydride as one of the monomeric constituents of the polyester. The same effect can be achieved by incorporating aliphatic dibasic acids, e.g., adipic or azelaic acid, tetrahydroisophthalic or tetrahydroorthophthalic acid or anhydride into the resin. Further, a combination of aliphatic and aromatic materials also can be used to this effect, depending on the desired final properties. Fire retardant properties may be built into the unsaturated polyester through the use of halogenated monomers, as known in the art, which include halogenated diacids, e.g., HET acid, anhydrides, such as tetrabromo- or tetrachlorophthalic anhydride, and halogenated glycol.

By unsaturated polyester resins, we also include polyester resins in which the unsaturation is located at the chain ends as, for example, vinyl ester resins.

In the present invention water extendable unsaturated polyester resins are particularly preferred. The term "water extendable" means that a water-in-oil emulsion results when water (e.g., up to 60% by weight based on the weight of the resin) is mixed with the resin. In such mixtures, surfactants may be used to promote emulsion stability. The UPE resin optionally may contain built-in detergency to aid in the formation of stable emulsions. For instance, the unsaturated polyester can be modified with conjugated fatty acids, or the acidic end groups of the unsaturated polyester can be neutralized to the carboxylate salt form to aid water extendability. Another technique is to introduce a polymeric glycol such as polyethylene glycol into the structure of the unsaturated polyester to enhance water extendability. Among other benefits, water extension of the polyester resin also aids workability, e.g., when filled with certain particulate fillers, and can greatly lower the overall cost of unsaturated polyester resin-based products. The presence of water also provides the very beneficial effect of reducing the exotherm during cure. Although water addition can reduce the strength of the cured resin product, as it is normally encapsulated as droplets, this can be quite suitably counteracted by the addition of a suitable dessicant. This also counteracts any dimensional changes which result from the slow loss of water. Examples of useful dessicants include calcium oxide, molecular sieves, Portland cement, pozzolan and other hydraulic setting agents.

A free radical (or free radical generating) initiator such as a peroxide or hydroperoxide is used to induce the copolymerization or crosslinking of the unsaturated polyester with the unsaturated crosslinking monomer. suitable initiators are well known and are exemplified by dibenzoyl peroxide (BPO), cumyl (cumene) hydroperoxide and methyl ethyl ketone peroxide. The initiators are used in minor amount, sufficient to chain extend and crosslink the functional components of the polyester resin composition to provide a thermoset material. For curing at room temperature or below, general practice is to employ a promoter and/or accelerator to speed decomposition of the initiator. Preferred promoters and accelerators include N,N-diethylaniline, N,N-dimethylaniline, N,N-dimethylaniline, N,N-dimethyl-p-toluidine and N,N,N',N'-tetramethylmethylene dianiline (TMMDA) for use with dibenzoyl peroxide, and cobalt naphthenate for use with cumene hydroperoxide or methyl ethyl ketone peroxide. Cobalt neodecanoate or cobalt neodecanoate/bipyridyl complexes represent examples of preferred accelerators useful in combination with dibenzoyl peroxide and an aromatic tertiary amine promoter. The promoter and/or accelerator is used in a minor, effective amount

As previously mentioned, the shrink control agents are copolymers of fatty alkyl vinyl esters and short chain vinyl esters. By "fatty alkyl vinyl esters" we mean vinyl esters with a fatty alkyl chain of 9 to 11 carbon atoms, i.e., those of formula CH₂:CHOOC-R wherein R is C₈ to C₁₀ alkyl (branched chain alkyl). By "short chain vinyl esters" we man those vinyl esters of formula CH₂:CHOOC-R′ wherein R' is C₁ to C₃. Thus they are copolymers of a vinyl ester of a lower (C₁ to C₃) monocarboxylic acid and a vinyl ester of a tertiary monocarboxylic acid of C₉ to C₁₁. Especially preferred are copolymers of a vinyl ester of a lower monocarboxylic acid and a vinyl ester of a versatic acid or a modified versatic® acid ("vinyl versatate"), these copolymers being more accurately expressed as poly(vinyl versatate-covinyl acetate).

The subject shrink control agents can, therefore, be defined as vinyl versatate copolymers formed from monomeric units of (a) vinyl versatate or a modified vinyl versatate or mixtures thereof of the structural formula: 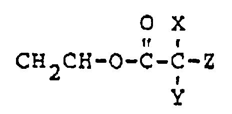 wherein each of X and Y is independently selected from a methyl or ethyl group (preferably each is methyl) and Z is an aliphatic hydrocarbon chain (preferably a straight chain aliphatic hydrocarbon chain) and the sum of the carbon atom content of X, Y and Z is from 7 to 9 (when X and Y are each methyl and Z is a C₅ to C₇ straight chain aliphatic hydrocarbon (a) equals vinyl versatate, per se) and (b) at least one copolymerizable vinyl monomeric compound, preferably a vinyl ester of a lower, i.e., C₁ to C₃ monocarboxylic acid with the most preferred co-monomer being vinyl acetate. The monomeric component (a) as described above preferably must be present in at least about 40 mole % and more preferably at least about 50 mole % of the subject SCA copolymer.

The versatic® acid, and other similar acid precursors, can be prepared from olefins via the Koch-Haaf synthesis whereby alcohols are treated with carbon monoxide in strong acid to produce the tertiary carboxylic acid. The corresponding vinyl esters may be prepared by reacting the formed acid directly with acetylene.

Certain of the most preferred vinyl versatate copolymers are commercially available. In particular, the preferred SCA product of poly(vinyl versatate-co-vinyl acetate) in various molar ratios are commercially available from Elotex AG, Sempach Station, Switzerland, under the tradename ELOTEX. Normally they are in powder form in which the powder comprises the subject copolymer filled with approximately 10% of an inert particulate carrier, such as talc, calcium carbonate, clay and the like. The powder also contains a protective colloid coating comprised by polyvinyl alcohol and unidentified, special high molecular weight components. The resulting particles range from about 1 to 2 µm to about 150 µm in size and are readily dispersible in polyester resins as well as in aqueous systems. The particulate solid containing the inventive copolymer is dispersible in unsaturated polyester resin.

As mentioned earlier, the amount of the inventive shrink control agent added to the resin is an amount effective to control, i.e., reduce or eliminate, shrinkage upon cure. The effectiveness of this shrink control agent may vary from particular resin to resin and it is well within routine skill to determine the proper amount. Adding too little of the shrink control agent is not effective, while an excessive addition can cause the product to (usually undesirably) expand during cure. We have found that about 1 to 40% and more preferably 2 to 20% of the shrink control agent, by weight of resin, is useful.

The present vinyl versatate copolymers have unexpectedly been found to give a constant degree of shrinkage control even when exposed to different or fluctuating temperature conditions during cure. Thus, a certain dosage of the present SCA copolymer in a particular polyester system will provide a constant shrinkage control without regard to whether the system is cured at, above or below room temperature or even at fluctuating temperatures during cure. It is only necessary to properly adjust the quantity of the initiator system used. The particular dosage of SCA used will depend upon the unsaturated polyester system, the particular vinyl versatate copolymer used and the desired degree of shrink control or even expansion of the cured system. This dosage can be readily determined in standard manners by the artisan making small trial samples for a particular system.

Polyester resins incorporating the inventive shrink control agent additionally can be filled to give desired properties to the thermoset product. Examples of fillers include clay, talc, gypsum, magnesium oxide, mica and fibers such as mineral, polymeric or glass fibers. Also useful as fillers are the aggregates commonly employed in hydraulic cement mortars and concretes, namely, fine aggregate (such as sand) and coarse aggregate such as crushed stone or gravel. Coloring agents optionally are included in the filler component. Fillers may be used in amounts sufficient to provide the desired results, for example from about 20 to 90% by weight of the filled resin composition.

A major advantage of the present invention is the unexpected compatibility of the cured polyester system when used as a filled coating on a substrate such as concrete.

The term "compatibility" as used means the ability of a layer of filled polyester to remain adhered to a substrate such as concrete without exhibiting breakage or detrimental cracking of the substrate when the coated system is subjected to thermal cycling from +55°C to -25°C, similar to the French LCPC Std. Test No. NF P 18-894 (12/86).

Use of the present vinyl versatate copolymer unexpectedly imparts a high degree of compatibility to the resultant polyester composite when this composite is coated as a layer on a substrate such as concrete. It is known that concrete has very low tensile strength while polyester resins, such as described with respect to the subject invention, exhibit high tensile strength and good adhesion to the substrate. Due to differences in moduli and thermal expansion rates of the materials, conventional coatings and filled overlays tend to curl and thus impart a high tensile strain on the substrate. This often results in cracking of the substrate or even rupture of the coating or overlay and part of the adjacent substrate from the substrate mass. It is presently found that filled unsaturated polyester resin compositions which include the subject vinyl versatate copolymer do not exhibit (or exhibit fewer of) such detrimental effects when subjected to varying temperature conditions.

When inorganic fillers are present in the subject invention, it is preferred that a coupling agent be applied to the filler to promote adhesion between the filler and the polyester resin. Suitable coupling agents are known in the art as those which promote adhesion between organic and inorganic materials. Typical coupling agents are silanes and titanates. Particularly preferred is gamma-methacryloxypropyltrimethoxysilane.

Also invented are shrinkage-controllable, thermosettable unsaturated polyester resin compositions. These compositions include a water-extendable unsaturated polyester resin including unsaturated polyester and an unsaturated monomer crosslinkable with the unsaturated polyester, for example styrene. These compositions also include an inhibitor adapted to prevent autopolymerization of the resin, for example phenolic compounds such as hydroquinone, methoxy hydroquinone (hydroquinone mono methyl ether), tert butyl hydroquinone, p-benzohydroquinone, ditert butyl-hydroquinone and tolunydroquinone. Optionally, these compositions also may include standard pigments, for example titanium dioxide; known multifunctional coupling agents adapted to promote binding aggregate and unsaturated polyester resin; water, preferably about 0.1 to about 10% by weight; paraffin wax or waxes; air release or wetting aids, for example known compatible surfactants; and polymerization inhibitors such as free radical or free radical generating initiators, for example certain peroxides and hydroperoxides such as dibenzoyl peroxide, cumyl(cumene)hydroperoxide, and methyl ethyl ketone peroxide.

The following examples illustrate the present invention. In these examples, unless otherwise specified, rectangular solids approximately 25 mm x 25 mm x 305 mm in dimension were prepared from various unsaturated polyester resins, the inventive shrink control agent (SCA), a curing agent (initiator and promoter) and other noted ingredients such as additional styrene, fillers and water. The solids were cured at room temperature. Linear shrinkage during the twenty-four hours following pouring of test pieces was measured by a linearly variable differential transformer (LVDT) and is expressed in change in microstrains (u strains) wherein 1,000 µ strains equals 0.1% linear shrinkage, i.e., length/original length x 1,000,000. Microstrains in the examples that are preceded by a minus sign indicate that shrinkage of that amount occurred. Similarly, a positive microstrain value indicates that expansion took place. Reproducibility of such measurements is on the order of about ±500-1000 microstrains. Volume shrinkage was determined by density changes in going from the uncured liquid state to the cured solid state 24 hours after initiation of cure.

The standard unsaturated polyester resin employed ("std") is a mixture of two resins designated A and B, the weight ratio of A to B being 1 to 2.

Resin A contains an unsaturated polyester which is a product of a condensation polymerization of the following monomers: propylene glycol (53 to 58 mole %), orthophthalic anhydride (20 to 25 mole %) and maleic anhydride (20 to 25 mole %). Resin A further contains styrene as a solvent for the polyester and asia crosslinking monomer in an amount of 25 to 32 weight percent based on the weight of the polyester. The resin preferably also contains inhibitor to prevent autopolymerization of the mass during storage. Useful inhibitors for this purpose are well known in the art. The final acid number for resin A is 12 to 16 mg KOH/g; the final hydroxyl number is 50 to 70 mg KOH/g.

Resin B is a condensation polymerization product containing the following monomers: diethylene glycol (2.5 to 7 mole %), ethylene glycol (45 to 50 mole %), tetrabromophthalic anhydride (9 to 11 mole %) (to add fire retarding properties to the thermoset product), orthophthalic anhydride (10 to 12 mole %) and maleic anhydride (24 to 28 mole %). Resin B otherwise is analogous to Resin A. The final acid number is 12 to 15 mg KOH/g, the final hydroxyl number is 40 to 55 mg KOH/g.

Another resin employed in evaluating the present invention is designated as Resin C. This is a commercially available product believed to consist of a polyester of orthophthalic acid, maleic acid and neopentyl glycol (molar ratios unknown) dissolved in styrene. The styrene content is stated by the supplier to be about 40 percent by weight of the total.

In the examples, all percentages are by weight and based on the total weight of all the ingredients except where otherwise noted.

### Example 1

| | % Std. Resin | % SCA | % Added Styrene | Density Initial | (g/cm³) Final | % V |
|---|---|---|---|---|---|---|
| 1. | 100 | 0 | 0 | 1.27 | 1.37 | -7.9 |
| 2. | 73.1 | 11.5 | 15.4 | 1.18 | 1.20 | -1.7 |

In Example 1, the standard resin (unfilled) was cured with 2.5% by weight benzoyl peroxide plus 0.15% by weight TMMDA, both based on the weight of the resin. Example 1 shows that the inventive shrink control agent (70/30 copolymer of vinyl versatate and vinyl acetate) reduced shrinkage in the neat resin mixture from 7.9% to 1.7% in trials 1 and 2, respectively.

### Example 2

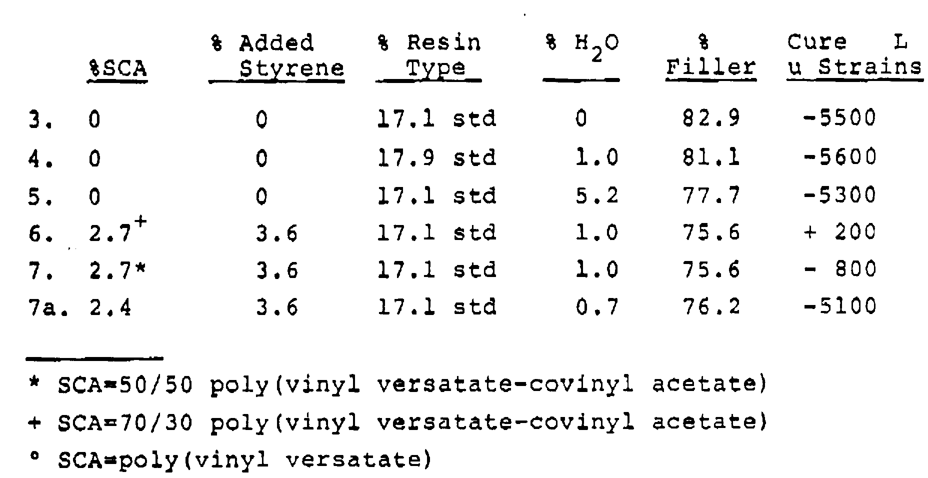

In Example 2 the effect of the inventive shrink control agent was studied in filled and water extended resin compositions. The filler consisted of, by weight, 69% fine sand coated with 0.2% silane coupling agent, 28.3% Portland cement, 1.5% TiO₂ (pigment) and 1% of a BPO/TMMDA initiator/promoter for unsaturated polyester resins and the indicated quantity of SCA. As seen in trials 6 and 7, shrinkage was successfully controlled. Trial 7a. shows that a vinyl versatate homopolymer, compared to the copolymer compositions cited in Example 2, did not reduce shrinkage in an effective manner.

### Example 3

| % SCA | % Added Styrene | % Resin Type C | % Filler | Cure L u Strains | |
|---|---|---|---|---|---|
| 8. | 0 | 0 | 18.3 | 81.7 | -7500 |
| 9. | 2.5 | 0 | 17.4 | 77.7 | -3200 |
| 10. | 4.9 | 0 | 17.4 | 77.7 | -1000 |

In Example 3, the inventive shrink control agent was tested in unsaturated polyester resin type C. Resin C was not of the water extendable type. The samples of trials 8 and 10 were cured with BPO/TMMDA, while trial 9 employed a cumene hydroperoxide/cobalt naphthenate initiator/promoter curing system. Shrinkage was greatly reduced by the use of the 70/30 (vinyl versatate/vinyl acetate) copolymer.

Example 4 shows how the resin compositions containing the inventive SCA can be cured over a broad range of ambient temperature conditions and still provide compositions of low shrinkage, no shrink or even expansion.

### Example 4

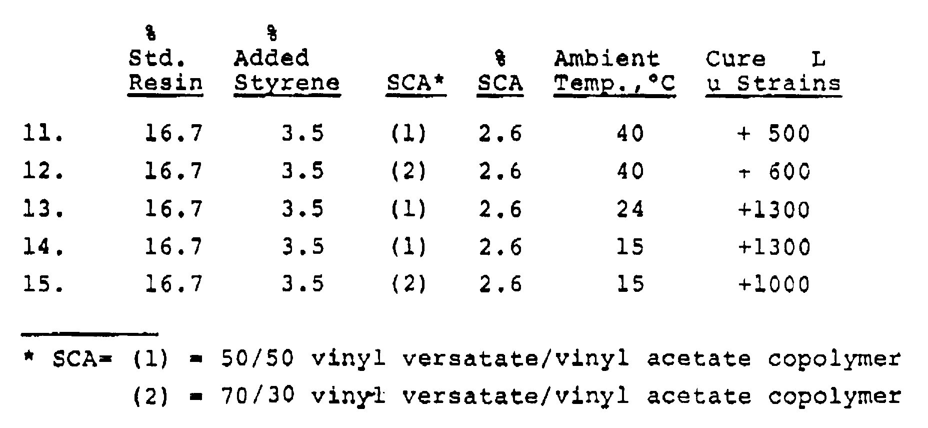

The advantages of good and predictable shrinkage control over a broad range of ambient temperature conditions will be apparent to those skilled in the art.

In Example 5, trial 17 shows how use of the inventive SCA in a filled, std. resin composition yields materials useful as bonded overlays for concrete due to an unexpected high degree of thermal compatibility. Trial 16 in the example shows that a high level of curing shrinkage and poor compatibility with concrete resulted in the absence of the inventive SCA. In both trials, the overlay thickness was about 6 mm. The usefulness of filled, unsaturated polyester resins containing the inventive SCA in such an application will be appreciated by those skilled in the art.

### Example 5

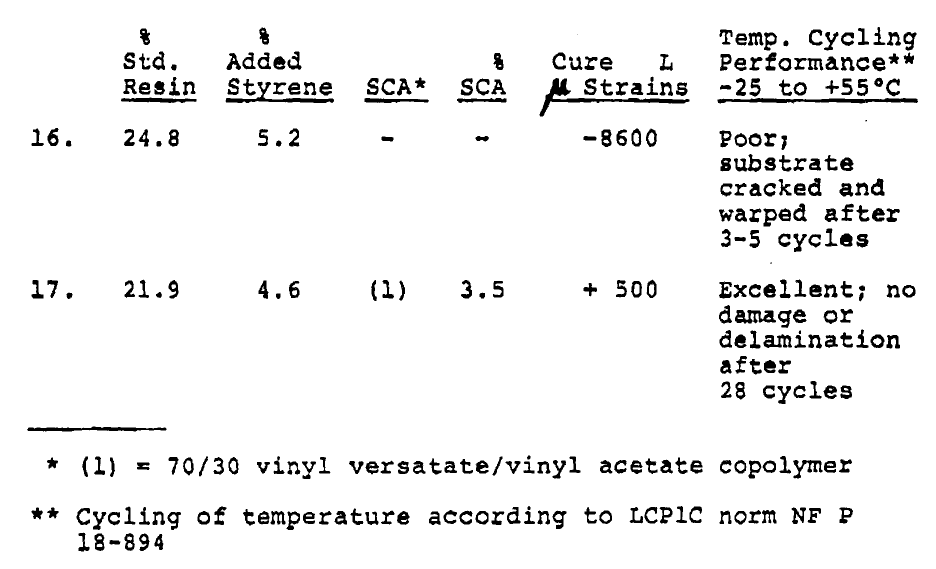

The trials of Example 6 further indicate the ability of the copolymer agent to effectively reduce linear shrinkage in isophthalate type of unsaturated polyester resins under ambient temperature conditions of curing; and for another orthophthalate-based, general purpose resin composition. Specimen sizes were about 25 mm x 305 mm x 4 mm, and the L values Of the example represent an average value of 3-4 individual specimens. In trials 19 and 20, samples were cured with dibenzoyl peroxide initiator and N,N-diethylaniline promoter. The samples of trial 18 were cured with benzoyl peroxide/TMMDA.

Resin D is a 29% solution in styrene of an unsaturated polyester prepared by condensing isophthalic acid, polycaprolactone diol, neopentyl glycol, diethylene glycol and maleic anhydride.

Resin E is a polycondensation product of isophthalic acid, ethylene glycol, propylene glycol and maleic anhydride. Resin E contains about 28% by weight of styrene.

Resin F is a polycondensation product of orthophthalic anhydride, ethylene glycol, propylene glycol and maleic anhydride. The preferred molar ratio of propylene to ethylene glycols is about 2.2 to 1. Resin F contains about 28% by weight of styrene.

### Example 6

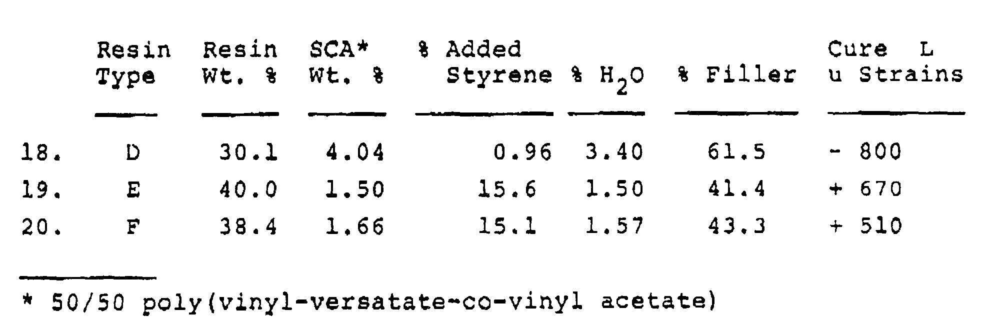

## Claims

1. A shrinkage-controllable, curable polyester resin composition comprising:
(a) unsaturated polyester resin and
(b) 1 to 40 % by weight, based on the weight of resin (a), of a copolymer as shrinkage-control agent consisting of moieties derived from:
(i) a fatty alkyl vinyl ester of the formula: 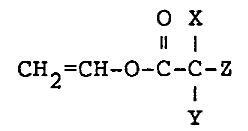 wherein each of X and Y is independently selected from a methyl and ethyl group, Z is an aliphatic hydrocarbon group and the sum total carbon atom content of X, Y and Z is from 7 to 9, and
(ii) a short chain vinyl ester of the formula:
CH₂=CHOOCR'
wherein R' is C₁-C₃ alkyl,
said moiety derived from said fatty alkyl vinyl ester (i) being present in said copolymer (b) in an amount of 40 to 80 mole percent.

2. The composition of claim 1 wherein in said fatty alkyl vinyl ester X and Y are CH₃ and Z is a C₅-C₇ aliphatic hydrocarbon group.

3. The composition of claim 1 or 2 wherein the short chain vinyl ester is vinyl acetate.

4. The composition of claim 3 wherein the copolymer is derived from said fatty alkyl vinyl ester (i) wherein X and Y are CH₃ and Z is a C₅-C₇ aliphatic hydrocarbon group, and vinyl acetate.

5. The composition of claim 4 wherein the molar ratio of said fatty alkyl vinyl ester (i) wherein X and Y are CH₃ and Z is a C₅-C₇ aliphatic hydrocarbon group to vinyl acetate is at least about 50 : 50.

6. The composition of claim 4 wherein the molar ratio of said fatty alkyl vinyl ester (i) wherein X and Y are CH₃ and Z is a C₅-C₇ aliphatic hydrocarbon group to vinyl acetate is about 70:30.

7. The composition of claim 1 comprising 2 to 20 percent by weight of (b) based on the weight of (a).

8. The composition of claim 1 wherein the unsaturated polyester resin comprises a polymerized product of one or more diacids or anhydrides selected from the group consisting of substituted or unsubstituted orthophthalic acid, isophthalic acid, orthophthalic anhydride, adipic acid, azeleic acid, tetrahydroisophthalic acid, tetrahydroorthophthalic acid, fumaric acid, maleic acid, maleic anhydride, halogenated aromatic or aliphatic diacids or anhydrides such as tetrabromoorthophthalic anhydride and HET acid; and one or more glycols selected from the group consisting of ethylene glycol, propylene glycol, neopentyl glycol, diethylene glycol, dipropylene glycol, halogenated glycol, glycol derivatives of dicyclopentadiene, polycaprolactone diol, polyethylene glycol, polypropylene glycol and glycerol.

9. The composition of claim 1 wherein the unsaturated polyester resin comprises a polymerized product of orthophthalic anhydride, propylene glycol, and maleic anhydride.

10. The composition of claim 1 wherein the unsaturated polyester resin comprises a polymerized product of ethylene glycol, diethylene glycol, orthophthalic anhydride, tetrabromophthalic anhydride, and maleic anhydride.

11. The composition of claim 1 wherein the unsaturated polyester resin comprises a polymerization product of orthophthalic acid or anhydride, maleic acid or anhydride and neopentyl glycol.

12. The compositionof claim 1 wherein the unsaturated polyester resin comprises a polycondensation product of ethylene glycol, propylene glycol, orthophthalic anhydride or acid, and maleic anhydride or acid.

13. The composition of claim 1 wherein the unsaturated polyester resin comprises a polycondensation product of ehtylene glycol, propylene glycol, isophthalic acid, and maleic anhydride or acid.

14. The composition of claim 1 wherein the unsaturated polyester resin comprises the polymerized product dissolved in an unsaturated monomer which is crosslinkable with said polymerized product.

15. The composition of claim 14 wherein the unsaturated monomer is styrene.

16. The composition of claim 14 wherein the unsaturated monomer comprises substituted styrene; mono-, di- or triacrylate or methacrylate; or diallylphthalate.

17. The composition of claim 14 comprising 20 to 60 % unsaturated monomer based on the weight of the polymerized product.

18. The composition of claim 4 wherein said shrink control agent consists essentially of said copolymer on an inert particulate carrier therefor.

19. The composition of claim 18 wherein the particulate carrier is talc.

20. The composition of claim 18 wherein the shrink control agent consists essentially of the copolymer on a particulate carrier and a protective colloid coating therefor.

21. The composition of claim 20 wherein the protective colloid consists essentially of polyvinyl alcohol.

22. The composition of claim 18 wherein the copolymer consists of, on a mole percent basis, about 70 % of said fatty alkyl vinyl ester (i) wherein X and Y are CH₃ and Z is a C₅-C₇ aliphatic hydrocarbon group and about 30 % vinyl acetate.

23. The composition of claim 18 wherein the copolymer consists of, on a mole percent basis, about 50 % of said fatty alkyl vinyl ester wherein X and Y are CH₃ and Z is a C₅-C₇ aliphatic hydrocarbon group and about 50% vinyl acetate.

24. The composition of claim 1 which is thermosettable and comprises:
(a) water-extendable unsaturated polyester resin comprising unsaturated polyester and an unsaturated monomer crosslinkable with the unsaturated polyester;
(b) an inhibitor adapted to prevent autopolymerization of the resin;
(c) a shrink control agent comprising copolymer derived from said fatty alkyl vinyl ester (i) wherein X and Y are CH₃ and Z is a C₅-C₇ aliphatic hydrocarbon group and vinyl acetate; and
(d) filler.

25. The composition of claim 24 comprising, by weight of the composition:
(a) about 7 to about 65 % unsaturated polyester resin;
(b) 0.025 to about 0.10 % polymerization inhibitor based on the weight of unsaturated polyester resin;
(c) about 0.05 to about 10 % of the copolymer shrinkage control agent; and
(d) about 20 % to about 90 % filler.

26. The composition of claim 25 wherein the filler comprises fine filler and/or coarse aggregate and a dessicant.

27. The composition of claim 23 wherein the fine filler is selected from fine sand; low density fly ash; silica flour, aluminum trihydrate; calcium carbonate; clay, glass or ceramic microballoons; and zeolites.

28. The composition of claim 26 wherein the coarse aggregate is selected from coarse sand; and metallic particles of spherical, flake, or irregular shape.

29. The composition of claim 26 wherein the dessicant comprises Portland cement.

30. The composition of claim 26 further comprising pigment.

31. The composition of claim 26 wherein said pigment comprises TiO₂.

32. The composition of claim 26 wherein fine and/or coarse aggregate is coated with a multifunctional coupling agent adapted to promote bonding between the fine and/or coarse aggregate and the unsaturated polyester resin.

33. The composition of claim 32 wherein the coupling agent comprises γ-methacryloxypropyltrimethoxysilane.

34. The composition of claim 24 further comprising 0.1 to 10 % by weight of water, based on the weight of the total composition.

35. The composition of claim 24 further comprising 0.1 to 0.8 % based on the weight of unsaturated polyester resin of one or more paraffin waxes melting within the temperature range of less than 80°C but greater than 50°C.

36. The composition of claim 24 further comprising an air release or wetting aid.

37. A thermoset polyester product obtained from a composition of claim 24 and a polymerization initiator.

38. The cured product of claim 37 wherein said polymerization initiator is comprised by dibenzoyl peroxide and N,N-di-ethylaniline.

## Patentansprüche

1. Härtbare Polyesterharzzusammensetzung mit kontrollierbarer Schrumpfung, die:
(a) ungesättigtes Polyesterharz und
(b) 1 bis 40 Gew.-%, bezogen auf das Gewicht von Harz (a), an Copolymer als Schrumpfungskontrollmittel umfaßt, das aus Anteilen besteht, die sich von:
(i) Fettalkylvinylester der Formel: 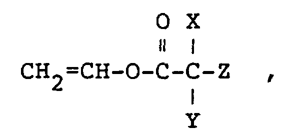 in der jedes von X und Y unabhängig ausgewählt ist aus einer Methyl- und Ethylgruppe, Z eine aliphatische Kohlenwasserstoffgruppe ist und die Summe der gesamten Kohlenstoffatome von X, Y und Z 7 bis 9 beträgt, und
(ii) kurzkettigem Vinylester der Formel:
CH₂=CHOOCR'
ableiten, in der R' C₁-C₃-Alkyl ist,
wobei der Anteil, der sich von dem Fettalkylvinylester (i) ableitet, in dem Copolymer (b) in einer Menge von 40 bis 80 Mol% vorhanden ist.

2. Zusammensetzung nach Anspruch 1, bei der in dem Fettalkylvinylester X und Y CH₃ sind und Z eine aliphatische C₅-C₇-Kohlenwasserstoffgruppe ist.

3. Zusammensetzung nach Anspruch 1 oder 2, bei der der kurzkettige Vinylester Vinylacetat ist.

4. Zusammensetzung nach Anspruch 3, bei der sich das Copolymer von dem Fettalkylvinylester (i), bei dem X und Y CH₃ sind und Z eine aliphatische C₅-C₇-Kohlenwasserstoffgruppe sind, und Vinylacetat ableitet.

5. Zusammensetzung nach Anspruch 4, bei der das Molverhältnis des Fettalkylvinylesters (i), bei dem X und Y CH₃ sind und Z eine aliphatische C₅-C₇-Kohlenwasserstoffgruppe ist, zu Vinylacetat mindestens etwa 50 : 50 beträgt.

6. Zusammensetzung nach Anspruch 4, bei der das Molverhältnis des Fettalkylvinylesters (i), bei dem X und Y CH₃ sind und Z eine aliphatische C₅-C₇-Kohlenwasserstoffgruppe ist, zu Vinylacetat etwa 70 : 30 beträgt.

7. Zusammensetzung nach Anspruch 1, die bezogen auf das Gewicht von (a) 2 bis 20 Gew.-% an (b) umfaßt.

8. Zusammensetzung nach Anspruch 1, bei der das ungesättigte Polyesterharz ein polymerisiertes Produkt aus einer oder mehreren Disäuren oder Disäureanhydriden ausgewählt aus der Gruppe bestehend aus substituierter oder unsubstituierter Orthophthalsäure, Isophthalsäure, Orthophthalsäureanhydrid, Adipinsäure, Azelainsäure, Tetrahydroisophthalsäure, Tetra-hydroorthophthalsäure, Fumarsäure, Maleinsäure, Maleinsäureanhydrid, halogenierte aromatische oder aliphatische Disäuren oder Disäureanhydride wie beispielsweise Tetrabromorthophthalsäureanhydrid und HET-Säure und einem oder mehreren Glykolen ausgewählt aus der Gruppe bestehend aus Ethylenglykol, Propylenglykol, Neopentylglykol, Diethylenglykol, Dipropylenglykol, halogeniertem Glykol, Glykolderivaten von Dicyclopentadien, Polycaprolactondiol, Polyethylenglykol, Polypropylenglykol und Glycerin umfaßt.

9. Zusammensetzung nach Anspruch 1, bei der das ungesättigte Polyesterharz ein polymerisiertes Produkt aus Orthophthalsäureanhydrid, Propylenglykol und Maleinsäureanhydrid umfaßt.

10. Zusammensetzung nach Anspruch 1, bei der das ungesättigte Polyesterharz ein polymerisiertes Produkt aus Ethylenglykol, Diethylenglykol, Orthophthalsäureanhydrid, Tetrabromphthalsäureanhydrid und Maleinsäureanhydrid umfaßt.

11. Zusammensetzung nach Anspruch 1, bei der das ungesättigte Polyesterharz ein Polymerisationsprodukt aus Orthophthalsäure oder Orthophthalsäureanhydrid, Maleinsäure oder Maleinsäureanhydrid und Neopentylglykol umfaßt.

12. Zusammensetzung nach Anspruch 1, bei der das ungesättigte Polyesterharz ein Polykondensationsprodukt aus Ethylenglykol, Propylenglykol, Orthophthalsäureanhydrid oder Orthophthalsäure und Maleinsäureanhydrid oder Maleinsäure umfaßt.

13. Zusammensetzung nach Anspruch 1, bei der das ungesättigte Polyesterharz ein Polykondensationsprodukt aus Ethylenglykol, Propylenglykol, Isophthalsäure und Maleinsäureanhydrid oder Maleinsäure umfaßt.

14. Zusammensetzung nach Anspruch 1, bei der das ungesättigte Polyesterharz das polymerisierte Produkt gelöst in einem ungesättigten Monomer umfaßt, das mit dem polymerisierten Produkt vernetzbar ist.

15. Zusammensetzung nach Anspruch 14, bei der das ungesättigte Monomer Styrol ist.

16. Zusammensetzung nach Anspruch 14, bei der das ungesättigte Monomer substituiertes Styrol, Mono-, Di- oder Triacrylat oder -methacrylat oder Diallylphthalat umfaßt.

17. Zusammensetzung nach Anspruch 14, die bezogen auf das Gewicht des polymerisierten Produkts 20 bis 60 % ungesättigtes Monomer umfaßt.

18. Zusammensetzung nach Anspruch 4, bei der das Schrumpfungskontrollmittel im wesentlichen aus dem Copolymer auf einem inerten, teilchenförmigen Träger dafür besteht.

19. Zusammensetzung nach Anspruch 18, bei der teilchenförmige Träger Talk ist.

20. Zusammensetzung nach Anspruch 18, bei der das Schrumpfungskontrollmittel im wesentlichen aus dem Copolymer auf einem teilchenförmigen Träger und einer Schutzkolloidbeschichtung dafür besteht.

21. Zusammensetzung nach Anspruch 20, bei der das Schutzkolloid im wesentlichen aus Polyvinylalkohol besteht.

22. Zusammensetzung nach Anspruch 18, bei der das Copolymer auf einer Molprozentbasis aus etwa 70 % des Fettalkylvinylesters (i), wobei X und Y CH₃ sind und Z eine aliphatische C₅-C₇-Kohlenwasserstoffgruppe ist, und etwa 30 % Vinylacetat besteht.

23. Zusammensetzung nach Anspruch 18, bei der das Copolymer auf einer Molprozentbasis aus etwa 50 % des Fettalkylvinylesters, bei dem X und Y CH₃ sind und Z eine aliphatische C₅-C₇-Kohlenwasserstoffgruppe ist, und etwa 50 % Vinylacetat besteht.

24. Zusammensetzung nach Anspruch 1, die hitzehärtbar ist und umfaßt:
(a) wasserverlängerbares, ungesättigtes Polyharz, das ungesättigten Polyester und ein ungesättigtes Monomer umfaßt, das mit dem ungesättigten Polyester vernetzbar ist,
(b) einen Inibitor, der dafür ausgelegt ist, die Autopolymerisation des Harzes zu verhindern,
(c) Schrumpfungskontrollmittel, das Copolymer umfaßt, das sich von dem Fettalkylvinylester (i), bei dem X und Y CH₃ sind und Z eine aliphatische C₅-C₇-Kohlenwasserstoffgruppe ist, und Vinylacetat ableitet, und
(d) Füllstoff.

25. Zusammensetzung nach Anspruch 24, die bezogen auf das Gewicht der Zusammensetzung umfaßt:
(a) etwa 7 bis etwa 65 % ungesättigtes Polyesterharz,
(b) 0,025 bis etwa 0,10 % Polymerisationsinhibitor, bezogen auf das Gewicht des ungesättigten Polyesterharzes,
(c) etwa 0,05 bis etwa 10 % des Copolymerschrumpfungskontrollmittels und
(d) etwa 20 % bis etwa 90 % Füllstoff.

26. Zusammensetzung nach Anspruch 25, bei der der Füllstoff feinen Füllstoff und/oder groben Zuschlagstoff und Trocknungsmittel umfaßt.

27. Zusammensetzung nach Anspruch 23, bei der der feine Füllstoff ausgewählt ist aus feinem Sand, Flugasche mit niederer Dichte, Siliciumdioxidmehl, Aluminiumtrihydrat, Calciumcarbonat, Ton, Glas oder Keramikmikroballonen und Zeolithen.

28. Zusammensetzung nach Anspruch 26, bei der der grobe Zuschlagstoff ausgewählt ist aus grobem Sand und metallischen Teilchen mit kugelförmiger, flockenförmiger oder unregelmäßiger Gestalt.

29. Zusammensetzung nach Anspruch 26, bei der das Trockenmittel Portlandzement umfaßt.

30. Zusammensetzung nach Anspruch 26, die ferner Pigmente umfaßt.

31. Zusammensetzung nach Anspruch 26, bei der das Pigment TiO₂ umfaßt.

32. Zusammensetzung nach Anspruch 26, bei der der feine und/oder grobe Zuschlagstoff mit einem multifunktionellen Kupplungsmittel beschichtet ist, das dafür ausgelegt ist, die Bindung zwischen dem feinen und/oder groben Zuschlagstoff und dem ungesättigten Polyesterharz zu fördern.

33. Zusammensetzung nach Anspruch 32, bei der das Kupplungsmittel γ-Methacryloxypropyltrimethoxysilan umfaßt.

34. Zusammensetzung nach Anspruch 24, die bezogen auf das Gewicht der Gesamtzusammensetzung ferner 0,1 bis 10 Gew.-% Wasser umfaßt.

35. Zusammensetzung nach Anspruch 24, die bezogen auf das Gewicht des ungesättigten Polyesterharzes ferner 0,1 bis 0,8 % von einem oder mehreren Paraffinwachsen umfaßt, das (die) im Temperaturbereich von weniger als 80 °C aber größer als 50 °C schmilzt (schmelzen).

36. Zusammensetzung nach Anspruch 24, die ferner ein Entlüftungsmittel oder ein Benetzungshilfsmittel umfaßt.

37. Hitzegehärtetes Polyesterprodukt, das aus einer Zusammensetzung gemäß Anspruch 24 und einem Polymerisationsinitiator erhalten worden ist.

38. Gehärtetes Produkt nach Anspruch 37, bei dem der Polymerisationsinitiator Dibenzoylperoxid und N,N-Diethylanilin umfaßt.

## Revendications

1. Composition de résine de polyester durcissable, à retrait contrôlable comprenant :
(a) une résine de polyester insaturé et
(b) 1 à 40% en poids, en se basant sur le poids de la résine (a), d'un copolymère en tant qu'agent de contrôle de retrait consistant en entités dérivées :
(i) un ester alkyl vinylique gras de la formule : 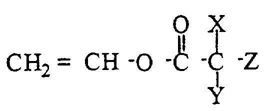 où chacun de X et Y est indépendamment sélectionné parmi un groupe méthyle et éthyle, Z est un groupe hydrocarbure aliphatique et la somme du contenu total en atomes de carbone de X, Y et Z est de 7 à 9, et
(ii) un ester vinylique à chaîne courte de la formule :
CH₂ = CHOOCR'
où R' est alkyle C₁-C_{3,}
ladite entité dérivée dudit ester alkyl vinylique gras (i) étant présente dans ledit copolymère (b) en une quantité de 40 à 80 pour-cent en moles.

2. Composition de la revendication 1 où dans ledit ester alkyle vinylique gras, X et Y sont CH₃ et Z est un groupe hydrocarbure aliphatique C₅-C₇.

3. Composition de la revendication 1 ou 2 où l'ester vinylique à chaîne courte est l'acétate de vinyle.

4. Composition de la revendication 3 où le copolymère est dérivé dudit ester alkyl vinylique gras (i) où X et Y sont CH₃ et Z est un groupe hydrocarbure aliphatique C₅-C₇, et de l'acétate de vinyle.

5. Composition de la revendication 4 où le rapport molaire dudit ester alkyl vinylique gras (i) où X et Y sont CH₃ et Z est un groupe hydrocarbure aliphatique C₅-C₇ à l'acétate de vinyle et d'au moins environ 50 : 50.

6. Composition de la revendication 4 où le rapport molaire dudit ester alkyl vinylique gras (i) où X et Y sont CH₃ et Z est un groupe hydrocarbure aliphatique C₅-C₇ à l'acétate de vinyle et d'environ 70 : 30.

7. Composition de la revendication 1 comprenant 2 à 20 pour-cent en poids de (b) en se basant sur le poids de (a).

8. Composition de la revendication 1 où la résine de polyester insaturé comprend un produit polymérisé d'un ou plusieurs diacides ou anhydrides sélectionnés dans le groupe consistant en acide orthophtalique, acide isophtalique, anhydride orthophtalique, acide adipique, acide azélaique, acide tétrahydroisophtalique, acide tétrahydroorthophtalique, acide fumarique, acide maléique, anhydride maléique, diacides ou anhydrides aromatiques ou aliphatiques halogénés substitués ou non substitués, comme l'anhydride tétrabromoorthophtalique et l'acide HET; et un ou plusieurs glycols sélectionnés dans le groupe consistant en éthylène glycol, propylène glycol, néopentyl glycol, diéthylène glycol, dipropylène glycol, glycol halogéné, dérivés de glycol du dicyclopentadiène, polycaprolactone diol, polyéthylène glycol, polypropylène glycol et glycérol.

9. Composition de la revendication 1 où la résine de polyester insaturé comprend un produit polymérisé d'anhydride orthophtalique, de propylène glycol et d'anhydride maléique.

10. Composition de la revendication 1 où la résine de polyester insaturé comprend un produit polymérisé d'éthylène glycol, diéthylène glycol, anhydride orthophtalique, anhydride tétrabromophtalique et anhydride maléique.

11. Composition de la revendication 1 où la résine de polyester insaturé comprend un produit de polymérisation de l'acide ou de l'anhydride orthophtalique, de l'acide ou de l'anhydride maléique et de néopentyl glycol.

12. Composition de la revendication 1 où la résine de polyester insaturé comprend un produit de polycondensation d'éthylène glycol, propylène glycol, anhydride ou acide orthophtalique et anhydride ou acide maléique.

13. Composition de la revendication 1 où la résine de polyester insaturé comprend un produit de polycondensation d'éthylène glycol, propylène glycol, acide isophtalique et anhydride ou acide maléique.

14. Composition de la revendication 1 où la résine de polyester insaturé comprend le produit polymérisé dissous dans un monomère insaturé qui est réticulable avec ledit produit polymérisé.

15. Composition de la revendication 14 où le monomère insaturé est du styrène.

16. Composition de la revendication 14 où le monomère insaturé comprend du styrène substitué; du mono-, di- ou triacrylate ou méthacrylate; ou bien du diallylphtalate.

17. Composition de la revendication 14 comprenant 20 à 60% du monomère insaturé en se basant sur le poids du produit polymérisé.

18. Composition de la revendication 4 où ledit agent de contrôle du retrait consiste essentiellement en ledit copolymère sur un support particulaire inerte de celui-ci.

19. Composition de la revendication 18 où le support particulaire est du talc.

20. Composition de la revendication 18 où l'agent de contrôle du retrait consiste essentiellement en le copolymère sur un support particulaire et son revêtement colloïde protecteur.

21. Composition de la revendication 20 où le colloïde protecteur consiste essentiellement en alcool polyvinylique.

22. Composition de la revendication 18 où le copolymère consiste en, sur une base de pourcentage molaire, environ 70% dudit ester alkyl vinylique gras (i) où X et Y sont CH₃ et Z est un groupe hydrocarbure aliphatique C₅-C₇ et environ 30% d'acétate de vinyle.

23. Composition de la revendication 18 où le copolymère consiste, sur une base en pourcentage molaire, en environ 50% dudit ester alkyl vinylique gras où X et Y sont CH₃ et Z est un groupe hydrocarbure aliphatique C₅-C₇ et environ 50% de l'acétate de vinyle.

24. Composition de la revendication 1 qui est thermodurcissable et qui comprend :
(a) une résine de polyester insaturé pouvant être chargée d'eau, comprenant un polyester insaturé et un monomère insaturé réticulable avec le polyester insaturé;
(b) un inhibiteur adapté à empêcher l'autopolymérisation de la résine;
(c) un agent de contrôle du retrait comprenant un copolymère dérivé dudit ester alkyl vinylique gras (i) où X et Y sont CH₃ et Z est un groupe hydrocarbure aliphatique C₅-C₇ et de l'acétate de vinyle; et
(d) une charge

25. Composition de la revendication 24 comprenant, en poids de la composition :
(a) environ 7 à environ 65% de la résine de polyester insaturé;
(b) 0,025 à environ 0,10% d'un inhibiteur de polymérisation en se basant sur le poids de la résine de polyester insaturé;
(c) environ 0,05 à environ 10% de l'agent de contrôle de retrait du copolymère; et
(d) environ 20% à environ 90% d'une charge.

26. Composition de la revendication 25 où la charge comprend une charge fine et/ou un agrégat grossier et un agent desséchant.

27. Composition de la revendication 23 où la charge fine est sélectionnée parmi le sable fin; la cendre volante de faible densité; la farine de silice, le trihydrate d'aluminium; le carbonate de calcium; des microbilles d'argile de verre ou de céramique; et des zéolites.

28. Composition de la revendication 26 où l'agrégat grossier est sélectionné parmi du sable grossier; et des particules métalliques de forme sphérique, de flocons ou irrégulière.

29. Composition de la revendication 26 où l'agent desséchant comprend du ciment Portland.

30. Composition de la revendication 26 comprenant de plus un pigment.

31. Composition de la revendication 26 où ledit pigment comprend TiO₂.

32. Composition de la revendication 26 où l'agrégat fin et/ou grossier est enduit d'un agent de couplage multifonctionnel adapté à favoriser la liaison entre l'agrégat fin et/ou grossier et la résine de polyester insaturé.

33. Composition de la revendication 32 où l'agent de couplage comprend du γ-méthacryloxypropyltriméthoxysilane.

34. Composition de la revendication 24 comprenant de plus 0,1 à 10% en poids d'eau, en se basant sur le poids de la composition totale.

35. Composition de la revendication 24 comprenant de plus 0,1 à 0,8%, en se basant sur le poids de la résine de polyester insaturé, d'une ou plusieurs cires de paraffine fondant à une température comprise entre moins de 80°C mais plus de 50°C.

36. Composition de la revendication 24 comprenant de plus un auxiliaire de mouillage ou de libération de l'air.

37. Produit de polyester thermodurci obtenu à partir d'une composition de la revendication 24 et d'un initiateur de polymérisation.

38. Produit durci de la revendication 37 où ledit initiateur de polymérisation est formé de peroxyde de dibenzoyle et de N,N-diéthylaniline.
